# FASCICULE DE BREVET EUROPEEN

(11) **EP 2 852 463 B1**
(45) Date de publication et mention de la délivrance du brevet: **13.03.2019**
(21) Numéro de dépôt: 13722495.2
(22) Date de dépôt: 17.04.2013
(51) Int. Cl.: B01L 99/00, B01L 3/00

(54) **PROCÉDÉ POUR NETTOYER DES PUITS À ÉCHANTILLONS DE TEST ET TÊTE DE NETTOYAGE EN FAISANT APPLICATION**
VERFAHREN ZUR REINIGUNG VON TESTPROBENVERTIEFUNGEN UND REINIGUNGSKOPF ZUR DURCHFÜHRUNG DIESES VERFAHRENS
METHOD FOR CLEANING TEST SAMPLE WELLS, AND CLEANING HEAD USING SAID METHOD

(30) Priorité: 19.04.2012 FR 1253607
(43) Date de publication de la demande: 01.04.2015
(73) Titulaire: Biomérieux, 69280 Marcy l'Étoile (FR)
(72) Inventeur: FOUCAULT, Frédéric, 69280 Marcy l'Etoile (FR)
(74) Mandataire: Putet, Gilles
(86) Numéro de dépôt international: PCT/FR2013/050847
(87) Numéro de publication internationale: WO 2013/156736

(56) Documents cités:
- WO-A1-00/58010
- WO-A1-83/00819
- US-A- 3 949 771
- US-A- 4 227 886
- US-A- 5 158 101

## Description

La présente invention concerne le domaine technique des systèmes micro-fluidiques au sens général et elle vise plus particulièrement le domaine des cartes tests pour analyses dans lesquelles sont aménagés des canaux d'alimentation de fluide jusqu'à des puits adaptés pour recevoir un réactif et un échantillon de fluide ou de test contenant des analytes à détecter, représentatifs d'une maladie ou de la présence de microorganismes.

L'objet de l'invention vise plus précisément les moyens techniques adaptés pour nettoyer les puits de telles cartes tests.

L'état de la technique a proposé divers dispositifs pour nettoyer les puits de carte test. Par exemple, le brevet US 4 635 665 décrit un dispositif de nettoyage comportant au moins une tête de lavage à deux tubes coaxiaux destinée à être introduite à l'intérieur du puits à nettoyer pour s'étendre à proximité du fond du puits. La tête de nettoyage comporte un tube de nettoyage délivrant à son extrémité libre un fluide de nettoyage et un tube d'aspiration monté concentriquement à l'intérieur du tube de nettoyage et adapté pour aspirer le fluide de nettoyage souillé. Les extrémités voisines du tube d'aspiration et du tube de nettoyage sont situées dans un même plan pour assurer une aspiration efficace. L'injection du liquide de nettoyage au centre de la tête et l'aspiration du liquide souillé à la périphérie de la tête ne permettent pas de garantir une récupération totale du liquide souillé.

Le brevet US 5 882 597 décrit un dispositif de nettoyage comportant une série de têtes de nettoyage comportant chacune un tube de nettoyage communiquant avec une chambre de stockage d'un fluide de nettoyage et délivrant à son extrémité libre, un fluide de nettoyage. Chaque tête de nettoyage comporte également un tube d'aspiration monté à l'intérieur de chaque tube de nettoyage pour aspirer le fluide de nettoyage souillé à partir de son extrémité libre qui dépasse de l'extrémité libre du tube de nettoyage. La partie terminale du tube de nettoyage est épanouie pour assurer la sortie du liquide sous une forme annulaire afin d'assurer l'étanchéité évitant la remontée d'air dans la chambre de stockage. La tête de nettoyage est déplacée afin de pénétrer à l'intérieur du puits à nettoyer.

Il apparaît en pratique difficile de respecter le montage coaxial entre les deux tubes de sorte que le fonctionnement correct d'une telle tête de nettoyage ne peut pas être assuré. Par ailleurs, il a été constaté qu'une telle tête de nettoyage ne donne pas satisfaction dans la mesure où elle ne permet pas d'obtenir à coup sûr, un nettoyage efficace des puits.

Les documents US-4.227.886 et US-3.949.771 décrivent d'autres dispositifs de nettoyage.

La présente invention vise donc à remédier aux inconvénients de l'état de la technique en proposant une nouvelle technique de nettoyage des puits d'une carte de test pour analyses, adaptée pour nettoyer complètement et de manière reproductible les puits à échantillon de test d'une carte test pour analyses.

Pour atteindre un tel objectif, l'objet de l'invention vise à proposer un procédé pour nettoyer au moins un puits à échantillon de test, aménagé dans une carte test pour analyses, à l'aide d'au moins une tête de nettoyage comportant au moins un tube de nettoyage délivrant à son extrémité libre, un fluide de nettoyage, et un tube d'aspiration monté à l'intérieur du tube de nettoyage pour aspirer le fluide de nettoyage souillé à partir de son extrémité libre située à proximité de l'extrémité libre du tube de nettoyage, le procédé consistant à assurer un déplacement relatif entre la carte test et la tête de nettoyage, de manière que la carte test occupe une position de nettoyage dans laquelle le tube de nettoyage délivre à son extrémité libre, le fluide de nettoyage à l'intérieur du puits à nettoyer et le tube d'aspiration aspire le fluide de nettoyage souillé.

Selon l'invention, le procédé consiste dans la position de nettoyage, à assurer une entrée d'air entre l'extérieur et l'intérieur de l'extrémité libre du tube de nettoyage de manière à créer un tourbillon du fluide de nettoyage à l'intérieur du puits à nettoyer, de la manière définie par la revendication 1. De plus, le procédé selon l'invention peut présenter en outre en combinaison au moins l'une et/ou l'autre des caractéristiques additionnelles suivantes :
- équiper l'extrémité libre du tube de nettoyage à l'aide d'un embout souple qui délimite l'entrée d'air lorsque ledit embout est en appui sur la carte test,
- assurer l'appui de l'extrémité libre du tube de nettoyage sur la carte test en vue de créer une zone d'aspiration de hauteur déterminée entre l'extrémité libre du tube d'aspiration et le fond du puits,
- créer la zone d'aspiration de hauteur déterminée entre l'extrémité libre du tube d'aspiration et le fond du puits, avec l'extrémité libre du tube d'aspiration dépassant par rapport à l'extrémité libre du tube de nettoyage,
- créer la zone d'aspiration de hauteur déterminée entre l'extrémité libre du tube d'aspiration et le fond du puits, avec l'extrémité libre du tube d'aspiration s'étendant en retrait par rapport à l'extrémité libre du tube de nettoyage,
- aspirer le fluide de nettoyage souillé à partir de l'extrémité libre du tube d'aspiration, selon plusieurs sections d'aspiration séparées, situées en position de nettoyage, à l'aplomb de spots placés dans le puits à échantillon de test,
- assurer le déplacement relatif entre la carte test et la tête de nettoyage de manière à déplacer latéralement la zone d'aspiration à une hauteur déterminée entre l'extrémité libre du tube d'aspiration et le fond du puits lorsque la zone d'aspiration ne permet pas de nettoyer dans une unique position de nettoyage le fond du puits.

Un autre objet de l'invention est de proposer une tête de nettoyage pour au moins un puits à échantillon de test aménagé dans une carte test pour analyses, comportant au moins un tube de nettoyage relié à une source de fluide de nettoyage et délivrant à son extrémité libre, le fluide de nettoyage et un tube d'aspiration monté à l'intérieur du tube de nettoyage et relié à une source d'aspiration et aspirant à son extrémité libre, située à proximité de l'extrémité libre du tube de nettoyage, le fluide de nettoyage souillé.

Selon l'invention, le tube de nettoyage est pourvu d'une entrée d'air entre l'extérieur et l'intérieur de son extrémité libre, à proximité de ou sur sa face transversale, de la manière définie par la revendication 1.

De plus, la tête de nettoyage selon l'invention peut présenter en outre en combinaison au moins l'une et/ou l'autre des caractéristiques additionnelles suivantes :
- l'entrée d'air comporte une série de canaux aménagés sur la face transversale délimitant l'extrémité libre du tube de nettoyage, ces canaux s'étendant radialement entre la paroi extérieure et la paroi intérieure du tube de nettoyage,
- les canaux sont répartis de manière régulière sur la face transversale du tube de nettoyage,
- le tube de nettoyage possède une face transversale rugueuse délimitant l'entrée d'air entre la paroi extérieure et la paroi intérieure du tube de nettoyage,
- l'extrémité libre du tube d'aspiration est située en retrait par rapport à l'extrémité libre du tube de nettoyage,
- l'extrémité libre du tube d'aspiration est située en retrait par rapport à l'extrémité libre du tube de nettoyage selon une valeur comprise entre 10 et 300 µm,
- le tube de nettoyage est pourvu d'un embout souple formant l'extrémité libre dudit tube de nettoyage,
- le tube d'aspiration comporte intérieurement un conduit communiquant avec la source d'aspiration et équipé à l'extrémité libre, de cloisons délimitant des sections d'aspiration séparées.

Un autre objet de l'invention est de proposer un appareil de nettoyage comportant une source de fluide de nettoyage, une source d'aspiration pour le fluide de nettoyage souillé, au moins une tête de nettoyage et un système de déplacement relatif entre la tête de nettoyage et une carte test pour analyses dans laquelle est aménagé au moins un puits à échantillon de test, le système de déplacement étant piloté pour occuper au moins une position de nettoyage du puits.

Selon l'invention, l'appareil comporte au moins une tête de nettoyage dont le tube de nettoyage est apte, en position de nettoyage, à venir en appui par son extrémité libre sur la carte test, pour créer une entrée d'air entre l'extérieur et l'intérieur de l'extrémité libre dudit tube de nettoyage.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue générale montrant une première variante de réalisation d'une tête de nettoyage conforme à l'invention.
La **Figure 2** est une vue en perspective de la tête de nettoyage illustrée à la **Fig. 1****.**
La **Figure 3** est une vue en coupe élévation montrant un autre mode de réalisation de la variante de la tête de nettoyage illustrée aux **Fig. 1** et **2****.**
La **Figure 4** illustre une autre variante de réalisation d'une tête de nettoyage conforme à l'invention.
La **Figure 5** illustre une vue en perspective en partie arrachée de la variante de réalisation de la tête de nettoyage illustrée à la **Fig. 4****.**
La **Figure 6** est une vue en coupe d'une autre variante de réalisation d'une tête de nettoyage.
La **Figure 7** illustre une variante de réalisation du tube d'aspiration faisant partie d'une tête de nettoyage conforme à l'invention.
La **Figure 8** illustre une autre variante de réalisation du tube d'aspiration faisant partie d'une tête de nettoyage conforme à l'invention.

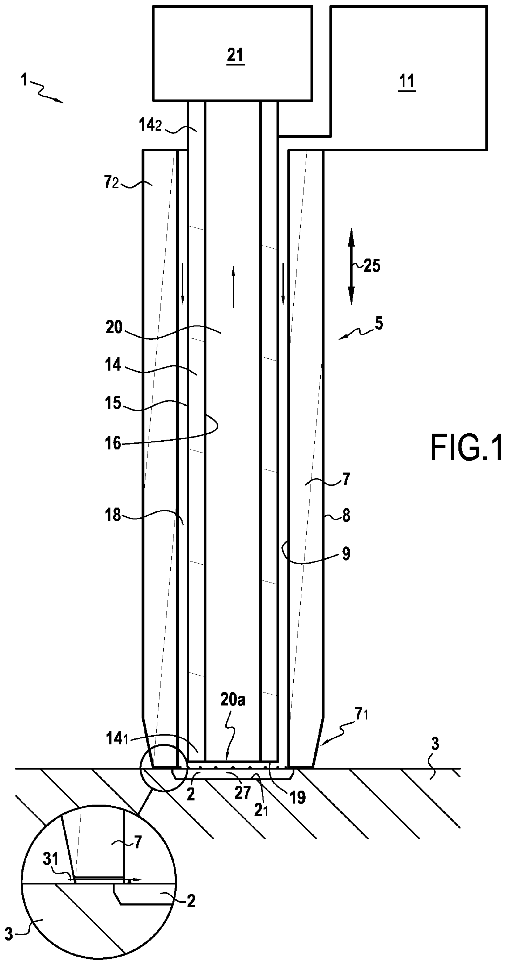

La **Fig. 1** illustre à titre d'exemple un appareil de nettoyage **1** pour au moins un puits à échantillon de test **2** aménagé dans une carte test pour analyses **3**. L'appareil **1** selon l'invention comporte au moins une tête de nettoyage **5** adaptée pour nettoyer un puits à échantillon de test **2** en une ou plusieurs positions selon la forme du puits, par exemple dans le cas d'un puits de forme oblongue. Dans l'exemple illustré à la **Fig. 1****,** l'appareil **1** comporte une seule tête de nettoyage **5**. Bien entendu, il est clair que l'appareil de nettoyage **1** peut comporter une pluralité de têtes de nettoyage **5** disposées par exemple côte à côte en lignes et en colonnes, en nombre et en répartition identiques ou non aux puits à échantillon de test **2** à nettoyer, aménagés sur la carte test pour analyses **3**. Par exemple, il peut être prévu de réaliser un appareil de nettoyage **1** comportant 8 ou 12 têtes de nettoyage **5.**

Chaque tête de nettoyage **5** comporte un tube de nettoyage **7** présentant par exemple une section transversale circulaire. Le tube de nettoyage **7** comporte une paroi tubulaire extérieure **8** et une paroi tubulaire intérieure **9.** Le tube de nettoyage **7** présente une extrémité libre **7₁** délimitée par une face transversale **10** de forme annulaire assurant la jonction entre la paroi extérieure **8** et la paroi intérieure **9.** A titre d'exemple, le diamètre externe du tube de nettoyage **7** est compris entre 0,5 mm et 25 mm et de préférence entre 0,5 mm et 5 mm.

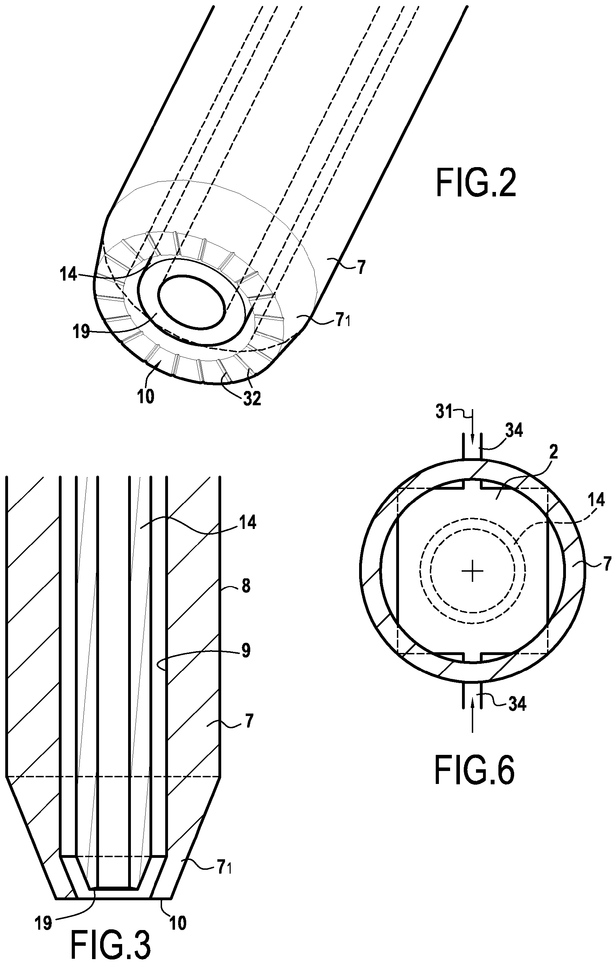

L'extrémité libre **7₁** du tube de nettoyage **7** peut présenter différentes formes. Ainsi, dans l'exemple illustré aux **Fig. 1** et **2**, la paroi intérieure **9** du tube de nettoyage **7** présente une section constante sur toute sa longueur alors que la paroi extérieure **8** du tube de nettoyage **7** présente une section constante à l'exception de son extrémité libre **7₁** qui présente une section décroissante jusqu'à la face transversale **10.** La **Fig. 3** illustre une autre variante de réalisation selon laquelle la section de la paroi intérieure **9** du tube de nettoyage **7** est constante à l'exception de son extrémité libre qui décroit jusqu'à la face transversale **10.**

Le tube de nettoyage **7** présente une extrémité **7₂** opposée à l'extrémité libre **7₁** et communiquant avec une source de fluide de nettoyage **11.** Par exemple, le fluide de nettoyage utilisé est de l'eau additionnée ou non d'adjuvants, un solvant aqueux et/ou organique, un solvant contenant des protéines, un tampon de lavage pouvant contenir de l'HEPES, du chlorure de sodium, de la BSA (bovine sérum albumine), de la caséine, du PEG (Polyéthylène glycol), de l'azoture de sodium, des tensioactifs comme le Tween®-20, du sucre, etc. Le fluide de nettoyage peut également comprendre des charges telles que talc, particules, corindon, alumine, verre, afin d'ajouter une action mécanique au nettoyage.

La tête de nettoyage **5** comporte également un tube d'aspiration **14** monté à l'intérieur du tube de nettoyage **7** et présentant une section transversale de préférence circulaire. Par exemple, le diamètre externe du tube d'aspiration **14** est compris entre 0,2 mm et 20 mm et de préférence entre 0,2 mm et 4 mm. Le tube d'aspiration **14** comporte une paroi tubulaire extérieure **15** et une paroi tubulaire intérieure **16**. Le tube d'aspiration **14** délimite entre sa paroi extérieure **15** et la paroi intérieure **9** du tube de nettoyage **7**, un conduit tubulaire **18** d'acheminement du fluide de nettoyage jusqu'à l'extrémité libre **7₁** du tube de nettoyage **7**. De préférence, les tubes d'aspiration **14** et de nettoyage **7** sont montés de manière coaxiale.

Le tube d'aspiration **14** comporte une extrémité libre **14₁** s'étendant à proximité de l'extrémité libre **7₁** du tube de nettoyage **7**. L'extrémité libre **14₁** du tube d'aspiration **14** est délimitée par une face transversale **19** se raccordant entre la paroi intérieure **16** et la paroi extérieure **15** du tube d'aspiration **14**. Le tube d'aspiration **14** délimite ainsi par sa paroi intérieure **16** un conduit **20** communiquant à partir de l'extrémité **14₂** opposée à l'extrémité libre **14₁**, avec une source d'aspiration **21** du fluide de nettoyage souillé, aspiré à partir de son extrémité libre **14₁**.

A titre d'exemple, la source d'aspiration **21** est réalisée par une pompe à vide, un venturi ou le vide réseau. D'une manière générale, le débit de la source d'aspiration **21** est supérieur au débit de la source de fluide de nettoyage **11**. Le différentiel entre les débits de la source de fluide de nettoyage **11** et de la source d'aspiration **21** dépend en particulier des conditions de fonctionnement et de la géométrie de la tête de nettoyage **5** et des puits à échantillon de test **2** à nettoyer. A titre d'exemple, le ratio du débit de la source d'aspiration sur le débit de la source de fluide de nettoyage 11 est compris entre 300 et 3000.

L'appareil de nettoyage **1** selon l'invention comporte également un système **25** de déplacement relatif entre la tête de nettoyage **5** et la carte test pour analyses **3** de manière que la tête de nettoyage **5** occupe au moins une première position dite de repos dans laquelle la tête de nettoyage est écartée par rapport à la carte test pour analyses **3** et une position de nettoyage pour laquelle le tube de nettoyage **7** assure l'amenée du fluide de nettoyage à l'intérieur du puits et le tube d'aspiration **14** aspire le fluide de nettoyage souillé. Le système de déplacement **25** qui peut être de tous types connus en soi n'est pas décrit plus précisément car il est bien connu de l'homme du métier et ne fait pas partie précisément de l'invention.

Selon une caractéristique avantageuse de réalisation, le système de déplacement **25** est piloté de manière à assurer pour la position de nettoyage, l'appui du tube de nettoyage **7** par sa face transversale **10** sur la carte test pour analyses **3** alors que l'extrémité libre du tube d'aspiration **14** est située au-dessus du fond **2₁** du puits à échantillon de test **2**. Dans cette position de nettoyage, le tube de nettoyage surplombe partiellement ou totalement le puits à échantillon de test **2.** Dans cette position de nettoyage, l'extrémité libre et plus précisément la face transversale **19** du tube d'aspiration **14** est située à une distance déterminée du fond du puits à nettoyer **2** pour délimiter avec ce dernier, une zone d'aspiration **27**. Avantageusement, en position de nettoyage, la face transversale **19** du tube d'aspiration **14** est située à une distance du fond du puits à nettoyer **2** pouvant aller jusqu'à 2 mm pour des micropuits voire jusqu'à 10 mm pour des microplaques.

Selon une caractéristique préférée de réalisation illustrée aux **Fig. 1** à **3**, l'extrémité libre **14₁** du tube d'aspiration **14** est située en retrait par rapport à l'extrémité libre **7₁** du tube de nettoyage **7**. En d'autres termes, la face transversale **19** du tube d'aspiration **14** est située en retrait par rapport à la face transversale **10** du tube de nettoyage **7**. Selon une caractéristique avantageuse de réalisation, la face transversale **19** du tube d'aspiration **14** est située en retrait par rapport à la face transversale **10** du tube de nettoyage selon une valeur comprise entre 10 µm et 3 mm et de préférence pour une application de lavage de microplaque par exemple, entre 1 mm et 3 mm et de préférence encore, pour une application de lavage de micropuits entre 10 µm et 300 µm.

Conformément à l'invention, le tube de nettoyage **7** est pourvu d'une entrée d'air **31** entre la paroi extérieure **8** et la paroi intérieure **9**. Dans l'exemple illustré aux **Fig. 1** et **2**, l'entrée d'air **31** comporte une série de canaux **32** aménagés sur la face transversale **10** délimitant l'extrémité libre du tube de nettoyage **7**. Ces canaux **32** s'étendent radialement entre la paroi extérieure **8** et la paroi intérieure **9** du tube de nettoyage en s'ouvrant sur les parois extérieure **8** et intérieure **9**. Les canaux **32** débouchent ou s'ouvrent sur le conduit tubulaire **18** d'acheminement du fluide de nettoyage, qui est délimité par la paroi intérieure **9** du tube de nettoyage **7**. Selon une variante préférée de réalisation, illustrée plus particulièrement à la **Fig. 2**, les canaux **32** sont répartis de manière régulière sur la face transversale **10** du tube de nettoyage **7**.

Selon une autre variante de réalisation illustrée plus particulièrement à la **Fig. 3**, le tube de nettoyage **7** possède une face transversale **10** rugueuse délimitant l'entrée d'air **31** entre la paroi extérieure **8** et la paroi intérieure **9** du tube de nettoyage **7**. Selon cette variante de réalisation, il doit être compris que lorsque la face transversale **10** est en appui sur une surface plane, la rugosité de la face transversale **10** est telle que cette dernière présente des parties saillantes délimitant entre elles des passages formant ensemble l'entrée d'air **31** entre les parois extérieure **8** et intérieure **9**.

La mise en oeuvre de la tête de nettoyage **5** découle directement de la description qui précède. Le procédé pour nettoyer un puits à échantillon de test **2** consiste donc à assurer le déplacement relatif entre la tête de nettoyage **5** et la carte test pour analyses **3** de manière à placer la tête de nettoyage **5** dans sa position de nettoyage. Dans cette position, illustrée à la **Fig. 1**, le tube de nettoyage **7** est en appui par son extrémité libre **7₁** sur la carte test. Dans cette position, la face transversale **10** du tube de nettoyage **7** est en appui sur au moins une partie du pourtour du puits à échantillon de test **2**. Dans cette position, le tube de nettoyage **7** est à même d'injecter le fluide de nettoyage à l'intérieur du puits **2** tandis que le tube d'aspiration **14** se trouve en surplomb du puits **2** pour aspirer le fluide de nettoyage souillé. Dans cette position, il apparaît une entrée d'air **31** entre l'extérieur et l'intérieur du tube de nettoyage **7** par l'intermédiaire par exemple des canaux **32** qui permettent l'acheminement de l'air, de l'extérieur du tube de nettoyage **7** à l'intérieur du puits à échantillon de test **2** à nettoyer.

L'injection du fluide de nettoyage à l'intérieur du tube **7** conduit à sa sortie par l'extrémité libre **7₁** du tube de nettoyage **7**. Simultanément, la source d'aspiration **21** aspire à partir de l'extrémité libre **14₁** du tube d'aspiration **14** le liquide souillé. Compte tenu de l'entrée d'air **31** réalisée entre l'extérieur et l'intérieur du tube de nettoyage **7**, il se produit à l'intérieur du puits à échantillon de test **2**, un tourbillon du fluide de nettoyage permettant un nettoyage efficace et complet du puits à échantillon de test **2**. Dans la mesure où le tube d'aspiration **14** est situé à l'intérieur du tube de nettoyage **7**, il apparaît une bonne récupération du fluide de nettoyage souillé.

Il est à noter que le positionnement de l'extrémité libre **14₁** du tube d'aspiration **14** par rapport à l'extrémité libre **7₁** du tube de nettoyage **7** dépend en particulier de la profondeur du puits à échantillon de test **2** à nettoyer. Comme indiqué ci-dessus, l'extrémité libre **14₁** du tube d'aspiration **14** est avantageusement placée en retrait par rapport à l'extrémité libre **7₁** du tube de nettoyage **7**.

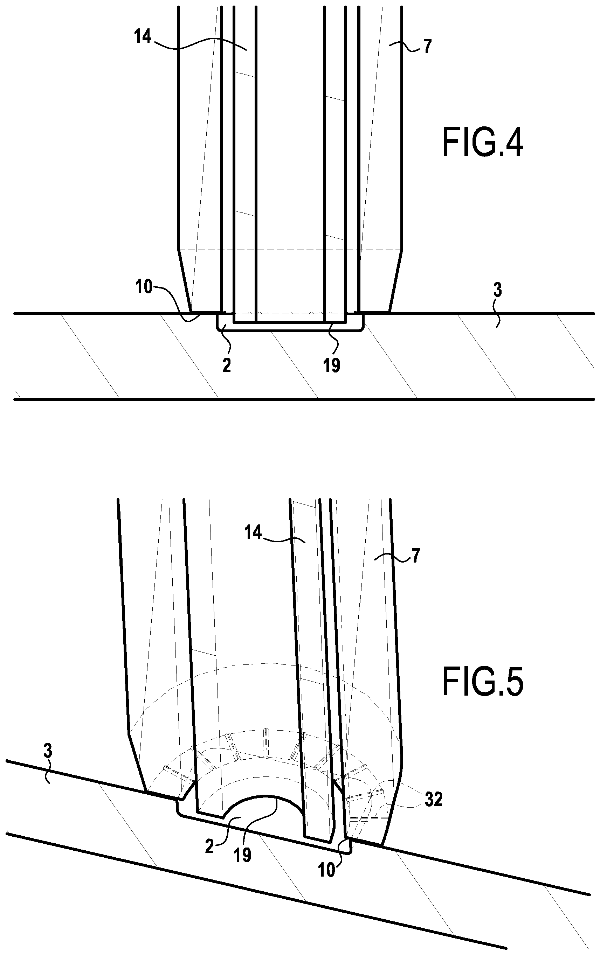

Toutefois, il peut être envisagé de réaliser une tête de nettoyage **5** dans laquelle l'extrémité libre **14₁** du tube d'aspiration dépasse de l'extrémité libre **7₁** du tube de nettoyage **7** comme cela apparaît plus précisément aux **Fig. 4** et **5**. En d'autres termes, la face transversale **19** du tube d'aspiration **14** s'étend en saillie par rapport à la face transversale **10** du tube de nettoyage **7**. Une telle disposition peut être ainsi envisagée pour des puits à échantillon de test **2** présentant une profondeur relativement importante permettant de rapprocher l'extrémité libre **14₁** du tube d'aspiration **14** par rapport au fond **2₁** du puits à échantillon de test **2**. Cette variante de réalisation permet de conserver à la zone d'aspiration **27** une hauteur adaptée pour assurer une bonne aspiration du fluide de nettoyage souillé. Avantageusement, comme indiqué précédemment, en position de nettoyage, la face transversale **19** du tube d'aspiration **14** est située à une distance du fond du puits à nettoyer **2** pouvant aller jusqu'à 2 mm pour des micropuits voire jusqu'à 10 mm pour des microplaques.

Dans les exemples qui précèdent, l'entrée d'air **31** entre l'extérieur et l'intérieur de l'extrémité libre **7₁** du tube de nettoyage **7** est réalisée par la géométrie du tube de nettoyage **7**.

La **Fig. 6** illustre un autre exemple de réalisation dans lequel l'entrée d'air **31** est réalisée par la géométrie de la carte test pour analyses **3**. Selon cet exemple de réalisation, le puits à échantillon de test **2** communique avec au moins un et dans l'exemple illustré à la **Fig. 6**, deux conduits **34** aménagés dans la carte test pour analyses **3** et formant l'entrée d'air **31**. Ces conduits **34** sont aménagés de manière qu'en position d'appui de l'extrémité libre **7₁** du tube de nettoyage **7** sur la carte test pour analyses **3**, les conduits **34** s'étendent de part et d'autre des parois intérieure **9** et extérieure **8** pour permettre l'entrée d'air à l'intérieur du tube de nettoyage **7**. Dans cette position d'appui, le tube de nettoyage **7** entoure ou ferme complètement le puits **2**, à l'exception des conduits **34**. Le tube de nettoyage **7** assure l'étanchéité entre la tête de nettoyage **5** et la carte test pour analyses **3.**

Selon un exemple de réalisation, l'extrémité libre **7₁** du tube de nettoyage **7** est adaptée pour assurer l'étanchéité avec la carte test pour analyses **3**. Selon une variante de réalisation, le tube de nettoyage **7** est muni à son extrémité libre **7₁**, d'un embout souple assurant l'étanchéité avec la carte test. Un tel embout souple permet également d'obtenir un contact doux entre le tube de nettoyage **7** et la carte test pour analyses **3**, et de compenser les tolérances du système de déplacement **25** pour assurer le positionnement de la tête de nettoyage **5** dans sa position de nettoyage.

Un tel embout souple peut être rajouté sur l'extrémité libre **7₁** du tube de nettoyage ou être surmoulé ou co-injecté au niveau de l'extrémité libre **7₁** du tube de nettoyage **7**. Par exemple, l'embout souple peut présenter une dureté comprise entre 20 et 80 Shore A. Un tel embout peut être réalisé en silicone, en élastomères comme les EPDM (Ethylène Propylène Diène Monomer), SBR (Styrène Butadiène Rubber) ... ou autres ou en élastomères thermoplastiques comme les Arnitel®, Pebax®... ou autres.

Bien entendu, il peut être envisagé qu'un tel embout souple puisse délimiter également l'entrée d'air **31** par exemple, en comportant des canaux **32**.

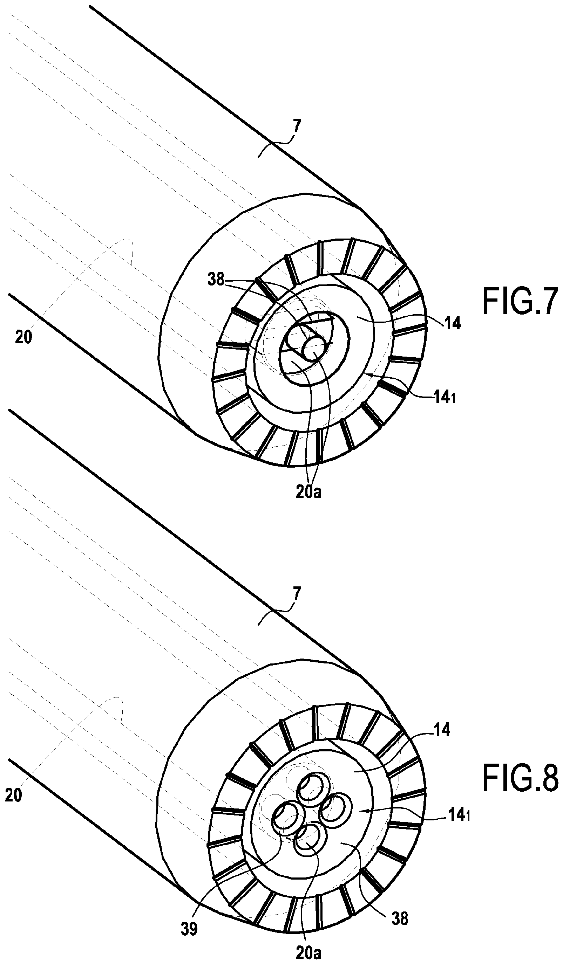

Dans les exemples qui précèdent, le tube d'aspiration **14** comporte intérieurement un conduit **20** s'ouvrant à l'extrémité libre **14₁**, par une seule section d'aspiration **20a**, correspondant à la section transversale complète du conduit **20**. Les **Fig. 7** et **8** illustrent une autre variante de réalisation du tube d'aspiration **14** permettant d'aspirer le fluide de nettoyage souillé à partir de l'extrémité libre **14₁**, selon plusieurs sections d'aspiration **20a** séparées les unes des autres par des cloisons **38**. Ces sections d'aspiration **20a** sont aménagées à l'extrémité libre **14₁** du tube d'aspiration **14** de manière qu'en position de nettoyage, ces sections d'aspiration **20a** se trouvent situées à l'aplomb de spots placés dans le puits à échantillon de test **2**. Un tel agencement contribue à renforcer le nettoyage du puits **2** et plus particulièrement dans les zones de dépôt d'un ou de plusieurs produits d'intérêt, appelées spots.

Dans l'exemple illustré à la **Fig. 7**, le conduit **20** du tube d'aspiration **14** est équipé à l'extrémité libre **14₁** du tube d'aspiration **14**, des cloisons **38** qui sont arrangées de toute manière appropriée pour former une géométrie ou un dessin spécifique. Ces cloisons **38** délimitent des sections d'aspiration **20a** qui dans l'exemple illustré à la **Fig. 7** sont de formes différentes. La **Fig. 8** illustre une autre variante de réalisation dans laquelle, le tube d'aspiration **14** comporte des sections d'aspiration **20a** de formes identiques, à savoir circulaire par exemple. Selon cette variante de réalisation, le conduit **20** du tube d'aspiration **14** s'ouvre à l'extrémité libre **14₁**, par exemple, par quatre sections d'aspiration **20a** séparées entre elles par les cloisons **38** réalisées par une face transversale fermant l'extrémité libre **14₁** du tube d'aspiration **14.**

Dans l'exemple illustré à la **Fig. 8**, chaque section d'aspiration **20a** est munie d'un cône d'entrée **39** convergeant vers le conduit **20** du tube d'aspiration **14** pour faciliter l'acheminement sélectif du fluide de nettoyage souillé à travers les sections d'aspiration **20a.** Bien entendu, il peut être prévu de réaliser les sections d'aspiration **20a** de l'exemple illustré à la **Fig. 8**, sans les cônes d'entrée **39.**

Dans les exemples qui précèdent, un déplacement relatif est effectué entre la tête de nettoyage **5** et la carte test pour analyses **3** afin de placer la tête de nettoyage **5** dans une position de nettoyage. Il est à noter qu'il peut être prévu d'assurer le déplacement relatif entre la carte test et la tête de nettoyage de manière à déplacer latéralement la zone d'aspiration à une hauteur déterminée entre l'extrémité libre du tube d'aspiration et le fond du puits lorsque la zone d'aspiration ne permet pas de nettoyer dans une unique position de nettoyage le fond du puits.

L'invention n'est pas limitée aux exemples décrits et représentés car diverses modifications peuvent y être apportées sans sortir du cadre défini par les revendications jointes.

## Revendications

1. Procédé pour nettoyer au moins un puits à échantillon de test (**2**), aménagé dans une carte test pour analyses (**3**), à l'aide d'au moins une tête de nettoyage (**5**) comportant au moins un tube de nettoyage (**7**) ayant une paroi extérieure (**8**) et une paroi intérieure (**9**) et délivrant à son extrémité libre (**7₁**), un fluide de nettoyage, et un tube d'aspiration (**14**) monté à l'intérieur du tube de nettoyage (**7**) pour aspirer le fluide de nettoyage souillé à partir de son extrémité libre (**14₁**) située à proximité de l'extrémité libre (**7₁**) du tube de nettoyage, le procédé consistant à assurer un déplacement relatif entre la carte test (**3**) et la tête de nettoyage (**5**), de manière que la carte test occupe une position de nettoyage dans laquelle le tube de nettoyage (**7**) délivre à son extrémité libre, le fluide de nettoyage à l'intérieur du puits (**2**) à nettoyer et le tube d'aspiration (**14**) aspire le fluide de nettoyage souillé, **caractérisé en ce qu'**il consiste, dans la position de nettoyage, à assurer le déplacement relatif entre la carte test (**3**) et la tête de nettoyage (**5**) de manière à assurer l'appui de l'extrémité libre (**7₁**) du tube de nettoyage (**7**) sur la carte test (**3**) en vue de créer une entrée d'air (**31**) entre l'extérieur et l'intérieur de l'extrémité libre (**7₁**) du tube de nettoyage (**7**), soit en aménageant une série de canaux (**32**) sur une face transversale (**10**) délimitant l'extrémité libre (**7₁**) du tube de nettoyage (**7**), ces canaux (**32**) s'étendant radialement sur la face transversale (**10**) entre la paroi extérieure (**8**) et la paroi intérieure (**9**) du tube de nettoyage (**7**), soit en prévoyant que le tube de nettoyage (**7**) possède une face transversale (**10**) rugueuse délimitant l'entrée d'air (**31**) entre la paroi extérieure (**8**) et la paroi intérieure (**9**), de manière à créer un tourbillon du fluide de nettoyage à l'intérieur du puits (**2**) à nettoyer.

2. Procédé selon la revendication 1, **caractérisé en ce qu'**il consiste à équiper l'extrémité libre (**7₁**) du tube de nettoyage (**7**) à l'aide d'un embout souple qui délimite l'entrée d'air (**31**) lorsque ledit embout est en appui sur la carte test.

3. Procédé selon l'une des revendications 1 ou 2, **caractérisé en ce qu'**il consiste à assurer l'appui de l'extrémité libre (**7₁**) du tube de nettoyage (**7**) sur la carte test (**3**) en vue de créer une zone d'aspiration (**27**) de hauteur déterminée entre l'extrémité libre (**14₁**) du tube d'aspiration (**14**) et le fond (**2₁**) du puits (**2**).

4. Procédé selon la revendication 3, **caractérisé en ce qu'**il consiste à créer la zone d'aspiration (**27**) de hauteur déterminée entre l'extrémité libre (**14₁**) du tube d'aspiration (**14**) et le fond (**2₁**) du puits (**2**), avec l'extrémité libre (**14₁**) du tube d'aspiration (**14**) dépassant par rapport à l'extrémité libre (**7₁**) du tube de nettoyage (**7**).

5. Procédé selon la revendication 3, **caractérisé en ce qu'**il consiste à créer la zone d'aspiration (**27**) de hauteur déterminée entre l'extrémité libre (**14₁**) du tube d'aspiration (**14**) et le fond (**2₁**) du puits (**2**), avec l'extrémité libre (**14₁**) du tube d'aspiration (**14**) s'étendant en retrait par rapport à l'extrémité libre (**7₁**) du tube de nettoyage (**7**).

6. Procédé selon l'une des revendications 1 à 5, **caractérisée en ce qu'**il consiste à aspirer le fluide de nettoyage souillé à partir de l'extrémité libre (**14₁**) du tube d'aspiration (**14**), selon plusieurs sections d'aspiration (**20a**) séparées, situées en position de nettoyage, à l'aplomb de spots placés dans le puits à échantillon de test (**2**).

7. Appareil de nettoyage comportant une source de fluide de nettoyage (**11**), une source d'aspiration (**21**) pour le fluide de nettoyage souillé, au moins une tête de nettoyage (**5**) et un système de déplacement relatif (**25**) entre la tête de nettoyage (**5**) et une carte test pour analyses (**3**) dans laquelle est aménagé au moins un puits à échantillon de test (**2**), le système de déplacement (**25**) étant piloté pour occuper au moins une position de nettoyage du puits, l'appareil comportant au moins une tête de nettoyage pour au moins un puits à échantillon de test (**2**) aménagé dans une carte test pour analyses (**3**), la tête de nettoyage (**5**) comportant au moins un tube de nettoyage (**7**) relié à la source de fluide de nettoyage (**11**) et délivrant à son extrémité libre (**7₁**), le fluide de nettoyage et un tube d'aspiration (**14**) monté à l'intérieur du tube de nettoyage (**7**) et relié à la source d'aspiration (**21**) et aspirant à son extrémité libre (**14₁**), située à proximité de l'extrémité libre (**7₁**) du tube de nettoyage (**7**), le fluide de nettoyage souillé, l'extrémité libre (**7₁**) du tube de nettoyage (**7**) étant délimitée par une face transversale (**10**) de forme annulaire assurant la jonction entre une paroi extérieure (**8**) et une paroi intérieure **9** du tube de nettoyage (**7**), **caractérisée en ce que** le tube de nettoyage (**7**) est apte, en position de nettoyage, à venir en appui par son extrémité libre (**7₁**) sur la carte test (**3**), pour créer une entrée d'air (**31**) entre l'extérieur et l'intérieur de son extrémité libre (**7₁**),
l'entrée d'air (**31**) comportant une série de canaux (**32**) aménagés sur la face transversale (**10**) délimitant l'extrémité libre (**7₁**) du tube de nettoyage (**7**), ces canaux (**32**) s'étendant radialement entre la paroi extérieure (**8**) et la paroi intérieure (**9**) du tube de nettoyage (**7**), ou la face transversale (**10**) étant rugueuse de manière à délimiter l'entrée d'air (**31**) entre la paroi extérieure (**8**) et la paroi intérieure (**9**) du tube de nettoyage (**7**).

8. Appareil de nettoyage comportant une tête de nettoyage selon la revendication 7, **caractérisé en ce que** les canaux (**32**) sont répartis de manière régulière sur la face transversale (**10**) du tube de nettoyage (**7**).

9. Appareil de nettoyage comportant une tête de nettoyage selon l'une des revendications 7 ou 8, caractérisé que l'extrémité libre (**14₁**) du tube d'aspiration (**14**) est située en retrait par rapport à l'extrémité libre (**7₁**) du tube de nettoyage (**7**).

10. Appareil de nettoyage comportant une tête de nettoyage selon la revendication 9, **caractérisée en ce que** l'extrémité libre (**14₁**) du tube d'aspiration (**14**) est située en retrait par rapport à l'extrémité libre (**7₁**) du tube de nettoyage (**7**) selon une valeur comprise entre 10 et 300 µm.

11. Appareil de nettoyage comportant une tête de nettoyage selon l'une des revendications 7 à 10, **caractérisé en ce que** le tube de nettoyage (**7**) est pourvu d'un embout souple formant l'extrémité libre (**7₁**) dudit tube de nettoyage (**7**).

12. Appareil de nettoyage comportant une tête de nettoyage selon l'une des revendications 7 à 11, **caractérisé en ce que** le tube d'aspiration (**14**) comporte intérieurement un conduit (**20**) communiquant avec la source d'aspiration (**21**) et équipé à l'extrémité libre (**14₁**), de cloisons (**38**) délimitant des sections d'aspiration séparées (**20a**).

## Patentansprüche

1. Verfahren zum Reinigen von mindestens einer Testprobenvertiefung (2), die in einer Analysetestkarte (3) angeordnet ist, mit mindestens einem Reinigungskopf (5), umfassend mindestens ein Reinigungsrohr (7), das eine Außenwand (8) und eine Innenwand (9) aufweist und an seinem freien Ende (7₁) ein Reinigungsfluid abgibt, und ein Saugrohr (14), das im Inneren des Reinigungsrohrs (7) montiert ist, zum Absaugen des verunreinigten Reinigungsfluids ausgehend von seinem freien Ende (14₁), das sich in der Nähe des freien Endes (7₁) des Reinigungsrohrs befindet, wobei das Verfahren aus dem Sicherstellen einer relativen Bewegung zwischen der Testkarte (3) und dem Reinigungskopf (5) derart, dass die Testkarte eine Reinigungsposition einnimmt, in der das Reinigungsrohr (7) an seinem freien Ende das Reinigungsfluid in das Innere der zu reinigenden Vertiefung (2) abgibt und das Saugrohr (14) das verunreinigte Reinigungsfluid absaugt, besteht, **dadurch gekennzeichnet, dass** es in der Reinigungsposition aus dem Sicherstellen der relativen Bewegung zwischen der Testkarte (3) und dem Reinigungskopf (5) derart besteht, dass sichergestellt ist, dass das freie Ende (7₁) des Reinigungsrohrs (7) auf der Testkarte (3) aufliegt, um einen Lufteinlass (31) zwischen der Außenseite und der Innenseite des freien Endes (7₁) des Reinigungsrohrs (7) zu erzeugen, entweder indem eine Reihe von Kanälen (32) auf einer Querfläche (10) angeordnet ist, die das freie Ende (7₁) des Reinigungsrohrs (7) begrenzt, wobei sich die Kanäle (32) radial auf der Querfläche (10) zwischen der Außenwand (8) und der Innenwand (9) des Reinigungsrohrs (7) erstrecken, oder indem vorgesehen ist, dass das Reinigungsrohr (7) eine raue Querfläche (10) besitzt, welche den Lufteinlass (31) zwischen der Außenwand (8) und der Innenwand (9) derart begrenzt, dass eine Verwirbelung des Reinigungsfluids im Inneren der zu reinigenden Vertiefung (2) erzeugt wird.

2. Verfahren nach Anspruch 1, **dadurch gekennzeichnet, dass** es aus dem Versehen des freien Endes (7₁) des Reinigungsrohrs (7) mit einer elastische Spitze, die den Lufteinlass (31) begrenzt, wenn die Spitze auf der Testkarte aufliegt, besteht.

3. Verfahren nach einem der Ansprüche 1 oder 2, **dadurch gekennzeichnet, dass** es aus dem Sicherstellen, dass das freie Ende (7₁) des Reinigungsrohrs (7) auf der Testkarte (3) aufliegt, um einen Absaugbereich (27) mit bestimmter Höhe zwischen dem freien Ende (14₁) des Saugrohrs (14) und dem Boden (2₁) der Vertiefung (2) zu erzeugen, besteht.

4. Verfahren nach Anspruch 3, **dadurch gekennzeichnet, dass** es aus dem Erzeugen des Absaugbereichs (27) mit bestimmter Höhe zwischen dem freien Ende (14₁) des Saugrohrs (14) und dem Boden (2₁) der Vertiefung (2) besteht, wobei das freie Ende (14₁) des Saugrohrs (14) in Bezug auf das freie Ende (7₁) des Reinigungsrohrs (7) vorsteht.

5. Verfahren nach Anspruch 3, **dadurch gekennzeichnet, dass** es aus dem Erzeugen des Absaugbereichs (27) mit bestimmter Höhe zwischen dem freien Ende (14₁) des Saugrohrs (14) und dem Boden (2₁) der Vertiefung (2) besteht, wobei das freie Ende (14₁) des Saugrohrs (14) sich in Bezug auf das freie Ende (7₁) des Reinigungsrohrs (7) zurückgesetzt erstreckt.

6. Verfahren nach einem der Ansprüche 1 bis 5, **dadurch gekennzeichnet, dass** es aus dem Absaugen des verunreinigten Reinigungsfluids ausgehend von dem freien Ende (14₁) des Saugrohrs (14) gemäß mehreren getrennten Saugabschnitten (20a) besteht, die sich in der Reinigungsposition senkrecht zu in der Testprobenvertiefung (2) platzierten Tüpfeln befinden.

7. Reinigungsvorrichtung, umfassend eine Reinigungsfluidquelle (11), eine Saugquelle (21) für das verunreinigte Reinigungsfluid, mindestens einen Reinigungskopf (5) und ein relatives Bewegungssystem (25) zwischen dem Reinigungskopf (5) und einer Analysetestkarte (3), in der mindestens eine Testprobenvertiefung (2) angeordnet ist, wobei das Bewegungssystem (25) derart gesteuert wird, dass es mindestens eine Vertiefungsreinigungsposition einnimmt, wobei die Vorrichtung mindestens einen Reinigungskopf für mindestens eine Testprobenvertiefung (2) umfasst, die in einer Analysetestkarte (3) angeordnet ist, wobei der Reinigungskopf (5) mindestens ein Reinigungsrohr (7), das mit der Reinigungsfluidquelle (11) verbunden ist und an seinem freien Ende (7₁) das Reinigungsfluid abgibt, und ein Saugrohr (14), das im Inneren des Reinigungsrohrs (7) montiert ist und mit der Saugquelle (21) verbunden ist und an seinem freien Ende (14₁), das sich in der Nähe des freien Endes (7₁) des Reinigungsrohrs (7) befindet, das verunreinigte Reinigungsfluid absaugt, umfasst, wobei das freie Ende (7₁) des Reinigungsrohrs (7) durch eine ringförmige Querfläche (10) begrenzt ist, welche den Übergang zwischen einer Außenwand (8) und einer Innenwand (9) des Reinigungsrohrs (7) sicherstellt, **dadurch gekennzeichnet, dass** das Reinigungsrohr (7) dazu ausgelegt ist, in der Reinigungsposition mit seinem freien Ende (7₁) auf der Testkarte (3) aufzuliegen, um einen Lufteinlass (31) zwischen der Außenseite und der Innenseite seines freien Endes (7₁) zu erzeugen,
wobei der Lufteinlass (31) eine Reihe von Kanälen (32) umfasst, die auf der Querfläche (10) angeordnet ist und das freie Ende (7₁) des Reinigungsrohrs (7) begrenzt, wobei sich die Kanäle (32) radial zwischen der Außenwand (8) und der Innenwand (9) des Reinigungsrohrs (7) erstrecken, oder die Querfläche (10) rau ist, sodass sie den Lufteinlass (31) zwischen der Außenwand (8) und der Innenwand (9) des Reinigungsrohrs (7) begrenzt.

8. Reinigungsvorrichtung, umfassend einen Reinigungskopf nach Anspruch 7, **dadurch gekennzeichnet, dass** die Kanäle (32) gleichmäßig auf der Querfläche (10) des Reinigungsrohrs (7) verteilt sind.

9. Reinigungsvorrichtung, umfassend einen Reinigungskopf nach einem der Ansprüche 7 oder 8, **dadurch gekennzeichnet, dass** das freie Ende (14₁) des Saugrohrs (14) in Bezug auf das freie Ende (7₁) des Reinigungsrohrs (7) zurückgesetzt ist.

10. Reinigungsvorrichtung, umfassend einen Reinigungskopf nach Anspruch 9, **dadurch gekennzeichnet, dass** das freie Ende (14₁) des Saugrohrs (14) in Bezug auf das freie Ende (7₁) des Reinigungsrohrs (7) gemäß einem zwischen 10 und 300 µm liegenden Wert zurückgesetzt ist.

11. Reinigungsvorrichtung, umfassend einen Reinigungskopf nach einem der Ansprüche 7 bis 10, **dadurch gekennzeichnet, dass** das Reinigungsrohr (7) mit einer elastischen Spitze versehen ist, welches das freie Ende (7₁) des Reinigungsrohrs (7) bildet.

12. Reinigungsvorrichtung, umfassend einen Reinigungskopf nach einem der Ansprüche 7 bis 11, **dadurch gekennzeichnet, dass** das Saugrohr (14) im Inneren eine Leitung (20) umfasst, die mit der Saugquelle (21) in Verbindung steht, und an seinem freien Ende (14₁) mit Trennwänden (38) ausgestattet ist, welche die getrennten Saugabschnitte (20a) begrenzen.

## Claims

1. A method for cleaning at least one test sample well (2), arranged in a test card for analysis (3), using at least one cleaning head (5) including at least one cleaning tube (7) with an outer wall (8) and an inner wall (9) and outputting, at its free end (7₁), a cleaning fluid, and a suction tube (14) mounted inside the cleaning tube (7) for sucking the soiled cleaning fluid from its free end (14₁) located in the vicinity of the free end (7₁) of the cleaning tube, the method consisting in ensuring relative movement between the test card (3) and the cleaning head (5), so that the test card occupies a cleaning position in which the cleaning tube (7) outputs, at its free end, the cleaning fluid inside the well (2) to be cleaned and the suction tube (14) sucks the soiled cleaning fluid, **characterized in that** it consists, into the cleaning position, in ensuring relative movement between the test card (3) and the cleaning head (5) so as to ensure bearing of the free end (7₁) of the cleaning tube (7) against the test card (3) in view of creating an air inlet (31) between the outside and the inside of the free end (7₁) of the cleaning tube (7), either by arranging a series of channels (32) on a transverse face (10) delimiting the free end (7₁) of the cleaning tube (7), these channels (32) extending radially on the transverse face (10) between the outer wall (8) and the inner wall (9) of the cleaning tube (7), or by providing that the cleaning tube (7) has a rough transverse face (10) delimiting the air inlet (31) between the outer wall (8) and the inner wall (9) so as to create a swirl of the cleaning fluid inside the well (2) to be cleaned.

2. The method according to claim 1, **characterized in that** it consists in equipping the free end (7₁) of the cleaning tube (7) using a flexible mouthpiece that delimits the air inlet (31) when said mouthpiece is bearing against the test card.

3. The method according to any of claims 1 or 2, **characterized in that** it consists in ensuring the bearing of the free end (7₁) of the cleaning tube (7) against the test card (3) in view of creating a suction area (27) with a determined height between the free end (14₁) of the suction tube (14) and the bottom (2₁) of the well (2).

4. The method according to claim 3, **characterized in that** it consists in creating the suction area (27) with a determined height between the free end (14₁) of the suction tube (14) and the bottom (2₁) of the well (2), the free end (14₁) of the suction tube (14) protruding from the free end (7₁) of the cleaning tube (7).

5. The method according to claim 3, **characterized in that** it consists in creating the suction area (27) with a determined height between the free end (14₁) of the suction tube (14) and the bottom (2₁) of the well (2), the free end (14₁) of the suction tube (14) being set back from the free end (7₁) of the cleaning tube (7).

6. The method according to any of claims 1 to 5, **characterized in that** it consists in sucking the soiled cleaning fluid from the free end (14₁) of the suction tube (14), according to several separated suction sections (20a), located into the cleaning position, in line with spots placed in the test sample well (2).

7. A cleaning apparatus including a cleaning fluid source (11), a suction source (21) for the soiled cleaning fluid, at least one cleaning head (5) and a relative movement system (25) between the cleaning head (5) and an test card for analysis (3) in which at least one test sample well (2) is arranged, the movement system (25) being driven to occupy at least one cleaning position of the well, the apparatus including at least one cleaning head for at least one test sample well (2) arranged in a test card for analyzes (3), the cleaning head (5) including at least one cleaning tube (7) connected to the cleaning fluid source (11) and outputting, at its free end (7₁), the cleaning fluid and a suction tube (14) mounted inside the cleaning tube (7) and connected to the suction source (21) and sucking, at its free end (14₁), located in the vicinity of the free end (7₁) of the cleaning tube (7), the soiled cleaning fluid, the free end (7₁) of the cleaning tube (7) being delimited by a ring-shaped transverse face (10) ensuring the junction between an outer wall (8) and an inner wall (9) of the cleaning tube (7), **characterized in that** the cleaning tube (7) is able, into the cleaning position, to bear at its free end (7₁) against the test card (3), in order to create an air inlet (31) between the outside and the inside of its free end (7₁),
the air inlet (31) including a series of channels (32) arranged on the transverse face (10) delimiting the free end (7₁) of the cleaning tube (7), these channels (32) extending radially between the outer wall (8) and the inner wall (9) of the cleaning tube (7), or the transverse face (10) being rough so as to delimit the air inlet (31) between the outer wall (8) and the inner wall (9) of the cleaning tube (7).

8. The cleaning apparatus including a cleaning head according to claim 7, **characterized in that** the channels (32) are evenly distributed on the transverse face (10) of the cleaning tube (7).

9. The cleaning apparatus including a cleaning head according to any of claims 7 or 8, **characterized in that** the free end (14₁) of the suction tube (14) is set back from the free end (7₁) of the cleaning tube (7).

10. The cleaning apparatus including a cleaning head according to claim 9, **characterized in that** the free end (14₁) of the suction tube (14) is set back from the free end (7₁) of the cleaning tube (7) according to a value comprised between 10 and 300 µm.

11. The cleaning apparatus including a cleaning head according to any of claims 7 to 10, **characterized in that** the cleaning tube (7) is provided with a flexible mouthpiece forming the free end (7₁) of said cleaning tube (7).

12. The cleaning apparatus including a cleaning head according to any of claims 7 to 11, **characterized in that** the suction tube (14) internally includes a duct (20) communicating with the suction source (21) and equipped, at the free end (14₁), with partition walls (38) delimiting separate suction sections (20a).
